(19) **Europäisches Patentamt / European Patent Office / Office européen des brevets**

(11) **EP 2 428 969 B1**

(12) **EUROPEAN PATENT SPECIFICATION**

(45) Date of publication and mention
of the grant of the patent:
**19.10.2016 Bulletin 2016/42**

(51) Int Cl.:
*H01F 38/14* (2006.01)          *H02J 5/00* (2016.01)
*H02J 7/02* (2006.01)

(21) Application number: **11176915.4**

(22) Date of filing: **09.08.2011**

(54) **Coil arrangement for an inductive charging device**

Spulenanordnung für eine induktive Ladevorrichtung

Agencement de bobine pour dispositif de charge inductive

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2010 EP 10172330**

(43) Date of publication of application:
**14.03.2012 Bulletin 2012/11**

(73) Proprietor: **Parspour, Nejila**
**70839 Gerlingen (DE)**

(72) Inventors:
• **Parspour, Neijla**
  **70839 Gerlingen (DE)**
• **Heinrich, Jörg**
  **70550 Stuttgart (DE)**

(56) References cited:
EP-A2- 0 298 707          GB-A- 1 473 514
US-A- 2 402 599           US-A- 5 237 165
US-A- 5 557 206           US-A1- 2004 000 974
US-A1- 2007 216 377       US-A1- 2008 266 042
US-B1- 7 323 964

**Description**

The present invention relates to a coil arrangement for use in an inductive charging device.

Known inductive charging systems using a primary coil unit and a secondary coil unit for inductive transfer of electrical power require the exact positioning of the secondary coil unit with respect to the primary coil unit in order to transfer electrical power with a sufficient degree of efficiency or to transfer electrical power at all. In some situations, however, such an exact positioning is difficult to achieve. For instance, if an electric vehicle, such as a car, that is equipped with an electric motor as drive system and batteries that need to be charged, it will hardly be possible to exactly position the car such that a secondary coil unit that is incorporated into the car, e. g. into a car's underbody, is located at an exact position with respect to a primary coil unit incorporated for instance, into the floor of a parking lot.

US 2004/00974 A1 discloses a planar resonator for wireless power transfer using a first and a second coiled conductor arranged on opposing surfaces of an interface of energy transfer. The first and second coiled conductors may comprise first and second spiral-wound conductors in an embodiment a third and a fourth spiral-shaped conductor are provided which are arranged with a first and second, respectively spiral-shaped conductor in a bifilar spiral configuration. In another embodiment the spirals are wound in the same direction, wherein one of the spirals may have an opposite winding direction and wherein the two spirals are not in the same physical plane.US 7,323,964 B1 discloses an non-contact power system with load and gap detection comprising a first core and a second core of an non-contact transformer, wherein several coils are provided on the different arms of the cores.

US 2,402,599 discloses an inductive coupling comprising a primary winding and a secondary winding. The primary winding is formed by two cylindrical windings wound in opposite directions around separate axes.

US 2007/0216377 A1 and US 2008/0266042 A1 disclose a transformer unit comprising a primary winding and a secondary winding, wherein said windings comprise one or more coils which are arranged adjacently to each other and are wound about different axes.

Other coil units are also known from EP0298707 A2 and US5557206 A1. It is an object of the present invention to provide a coil arrangement that is more tolerant with respect to the positioning of the primary coil unit and the secondary coil unit relative to each other, but nevertheless achieve a high degree of efficiency with respect to the inductive transfer of electrical power.

This object is achieved according to the present invention by a coil arrangement as defined in the claims and an inductive charging device as defined in the claims.

The present invention is based on the idea of increasing the positioning tolerance by modifying the commonly used winding arrangement of at least one or both of the primary coil unit and the secondary coil unit. In particular, at least one of the coil windings of said primary coil unit and/or said secondary coil unit, respectively, is arranged and/or adapted such that it has a different winding direction compared to the other windings of the same coil unit, i.e. a current running through that at least one winding (having a different winding direction) runs in a different direction than the current running through the other windings of the same coil unit. The idea behind that is that the magnetic field above such a modified coil unit is as constant as possible in an area that is as large as possible, which is achieved by the different magnetic fluxes generated by said at least one winding and the remaining windings which magnetic fluxes superpose each other. In particular, the magnetic flux generated by said at least one winding is arranged opposite to the magnetic flux generated by the other windings of the same coil unit so that the single peak of the magnetic flux generated usually by a coil unit is "flattened". Hence, a substantially constant magnetic flux is achieved in a certain area in which electrical power can be transferred between the two coil units with an almost equal degree of efficiency. This, however, means that such a system is more tolerant with respect to the positioning of the primary and secondary coil units relative to each other for achieving a good transfer of electrical power.

There are many different embodiments available of the devices and units according to the present invention, which are defined in the dependent claims and described in the detailed description provided below.

It shall be noted that in preferred embodiments the primary coil unit will be modified compared to known coil units as described above and that the secondary coil unit is not modified compared to known coil units, i.e. the secondary windings are all arranged in the same winding direction. However, in other embodiments both coil units may be modified, or only the secondary coil unit may be modified in this way.

Further, in many embodiments, the primary coil unit will be stationary and the secondary coil unit will be movable, particularly in a direction parallel to the primary plane in which the primary coil unit is substantially arranged. However, in other embodiments both coil units may be movable or only the primary coil unit may be movable.

In many embodiments the primary coil unit is substantially larger, i.e. covers a larger area, than the secondary coil unit, which is generally substantially smaller. However, in other embodiments both coil units may substantially be of the same size, i.e. cover substantially an area of the same size, or the secondary coil unit may even be larger than the primary coil unit.

The general form of the coils is generally not important for the present invention. The form may be selected dependent upon the desired application. The windings of the primary coil unit and/or the secondary coil unit may be arranged in a round, oval, rectangular, square, or meander-like form.

It generally holds that the primary coil unit and the secondary coil unit, between which electrical power can be transferred, can be made larger, if the coil units, i.e. the area covered by the windings, are made larger.

The distance between neighboring windings of the respective coil units is generally identical. However, the distance has an influence on the magnetic flux. Hence, preferably, in embodiments the distance between neighboring windings is not identical for all windings. In particular, the at least one winding having a different winding direction than the other windings of a coil unit is arranged at a different distance to its neighboring winding(s) compared to the other windings of the same coil unit. In practice, the distance between said windings is selected such that the magnetic flux is as constant as possible over an area that is as large as possible. Preferably, both coil units are operated in resonance, preferably on the same resonance frequency. This is achieved in an embodiment by providing a capacity in the primary control unit or in the secondary control unit. Thus, the maximum power transfer and the maximum degree of efficiency can be achieved. In practical situations, however, this condition might not always be fulfilled, for instance, if the moveable coil unit is not exactly parallel to the stationary coil unit for whatever reason. Thus, preferably, a means for checking whether or not the resonance condition is available, e. g. by measuring the phase offset between current and voltage, is provided. If such an offset is measured, i.e. if there is no resonance, the respective control unit is adapted for controlling the current provided to the respective coil unit, e.g. for controlling the frequency of an inverter providing said current such that the resonance condition is achieved again.

To cover a larger area, i.e. to further increase the positioning tolerance, several coil units, e. g., several primary coil units, may be arranged within the same plane.

The coil arrangement according to the present invention may not only be used for transferring electrical power from the primary coil unit to the secondary coil unit, e. g. to charge a load, such as a battery, coupled to the primary coil unit. In a preferred example electrical power can also be transferred in the other direction, e. g. for using the load as an energy reservoir, and for supplying power from said load into the power grid at times when there is a great need for electrical energy. This idea is generally known under the keyword "smart power grid".

It is also possible to transfer, in addition to electrical power, a data signal modulated onto the electrical power signal. For instance, data about the load may be transferred to the primary side for enabling the power supplier to charge the user for any consumed electrical power. For instance, if the present invention is used for contactless charging of cars at public parking lots, data about the car or the owner of the car may be transferred in a contactless manner from secondary coil unit to the primary coil unit and a data receiver coupled to primary control unit so that the car owner can be charged for the electrical energy consumed when charging the car's battery. Further, data about the load/charging conditions and/or load parameters may be transferred to the primary side in this way.

According to the present invention said primary coil unit and said secondary coil unit are movable relative to each other in directions substantially parallel to said primary plane.

In an example of the coil arrangement said primary coil unit is stationary and said secondary coil unit is movable relative to said stationary primary coil unit.

In an example of the coil arrangement said at least one primary winding and/or at least one secondary winding is adapted for being provided with different current than the other primary windings or secondary windings, respectively.

In an example of the inductive charging unit said external load is a chargeable battery.

In an example of the inductive charging unit said primary control unit comprises a charging capacitor and/or a rectifying circuit for converting an external power into a DC power signal.

In an example of the inductive charging unit it further comprises a secondary control unit coupled to said secondary coil unit for providing a secondary current from said secondary coil unit to said external load.

In an example of the inductive charging unit said secondary control unit comprises a reactive current correction unit for compensating reactive components in said secondary current.

In an example of the inductive charging unit said secondary control unit comprises a rectifier unit for rectifying said secondary current and a capacitor for storing a rectified secondary current.

In an example of the inductive charging unit said primary control unit further comprises a measurement unit for measuring whether said primary coil unit is in resonance, in particular by measuring any phase offsets between primary current and primary voltage, and wherein said inverter control unit is adapted for changing the frequency of said inverter if the primary coil unit is out of resonance to bring it back into resonance.

In an example of the inductive charging unit said primary control unit and said secondary control unit are adapted for bringing the primary coil unit and said secondary coil unit into resonance, in particular on the same frequency, in particular by providing an appropriately dimensioned primary capacitor within the primary control unit and an appropriately dimensioned secondary capacitor in said secondary control unit.

In an example of the inductive charging unit said primary control unit, said secondary control unit and said coil arrangement are adapted for inductively transferring electrical power in both directions, i.e. from the primary coil unit to the secondary coil unit and from the secondary coil unit to the primary coil unit.

In an example of the inductive charging unit it further comprises data transmission means for superposing a data signal onto the primary current and/or the secondary current, in particular by pulse modulation, for inductively transferring said data signal between said primary coil unit and said secondary coil unit.

In an example of the inductive charging unit said data signal carries data about the load and/or the power supply, for instance for payment charging of electrical power consumed by said load.

In an example of the inductive charging unit said primary coil unit is mounted on or within a floor, a ceiling, a wall or any other element that is substantially stationary, in particular a piece of furniture.

In an example of the inductive charging unit said secondary coil unit is mounted on or within a mobile device, such as an electronic device having a chargeable battery, or a vehicle having a chargeable battery, such as a car, motor bike, cart, truck, bus, or electrical bicycle.

In an example of the inductive charging unit it further comprises positioning-support means for supporting the positioning of the primary coil unit and/or the secondary coil unit with respect to each other, in particular optical positioning-detection means for sensing positioning markings.

The invention will be explained below in detail with reference to the drawings, in which

Fig. 1    shows a schematic drawing of a coil arrangement,
Fig. 2    shows a simplified block diagram of an inductive charging device according to an embodiment of the present invention,
Fig. 3    shows a transformer equivalent circuit,
Fig. 4    shows a diagram illustrating the current directions in a coil unit of a coil arrangement according to the present invention,
Fig. 5    shows the flux-density distribution for a coil unit as shown in Fig. 4,
Fig. 6    shows the mutual inductance achieved with a coil unit of a coil arrangement according to the present invention,

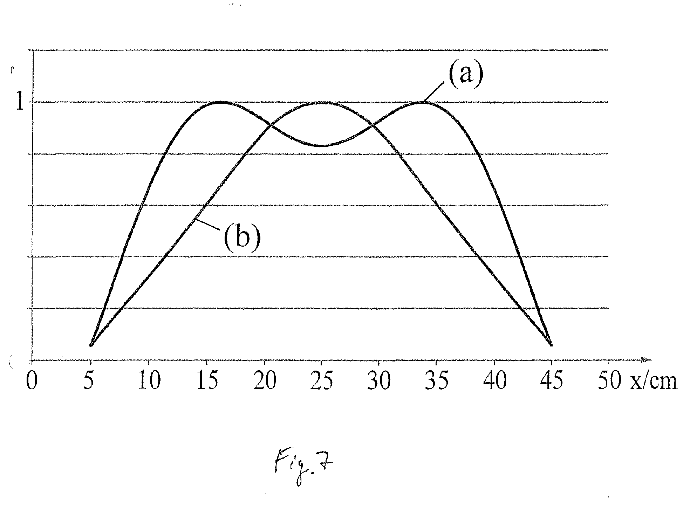

Fig. 7    shows coupling coefficients of coil unit of a coil arrangement according to the present invention compared to a known coil unit,
Fig. 8    shows the measured efficiency achieved according to the present invention,

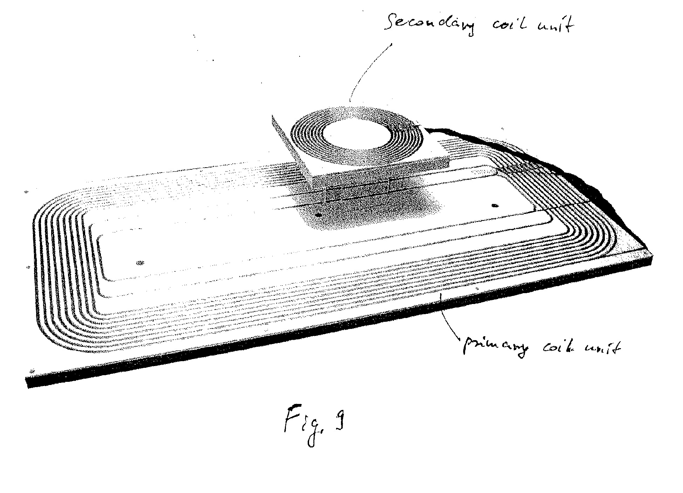

Fig. 9    shows an embodiment of a coil arrangement according to the present invention,
Fig. 10    shows a coil unit of a coil arrangement according to the present invention indicating the winding directions, and
Fig. 11    shows a diagram of the coupling for another embodiment of a coil arrangement according to the present invention.

A detailed description of the present invention follows.

A winding layout for use in inductive charging systems is introduced. The proposed layout leads to an extension of the positioning tolerance of the system. The layout of the winding and the inductive charging system is looked at before the background of use in electric vehicles. The necessary reactive power compensation and control technology will be discussed as far as they are related to the layout of the windings.

## 1 Introduction

The demands in inductive charging systems used in electric vehicles are different, in particular partly higher, than in charging systems for industrial use. An essential aspect of the use in electric vehicles is the demand for a high tolerance of positioning faults:

- the mounting situation for the charging systems is different at different car models, the optimal parking position over the charging station is therefore also different; and

- the exact positioning of the vehicle within a few centimeters over the charging station is not possible or unreasonable for the driver.

The procedure introduced in this contribution is based on analytic calculations for the coupling factors, which describe the coupling between one primary and secondary winding.

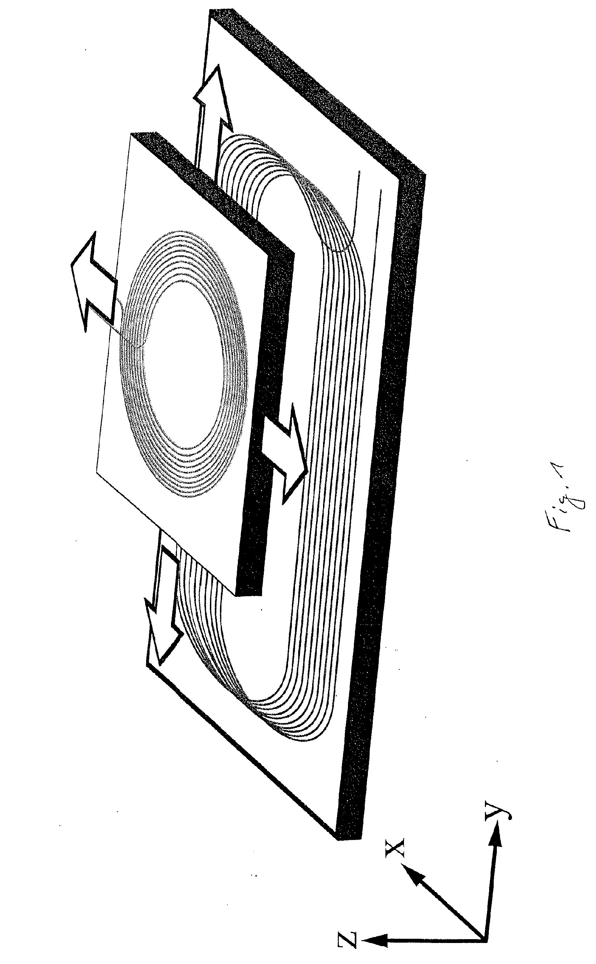

It is shown that the presupposed simplifications and restrictions are expedient both for the analytic calculation of the proposed set-up and for the design of the windings suggested here. The schematic drawing of the charging system suggested here is shown in **figure 1.**

The positioning tolerance is essentially reached through:

1. optimization of the winding layout in a way, which connects the magnetic fluxes approximately independently of the position of the windings to each other in a restricted range; and
2. optionally, the use of more than one single winding on the secondary side and the choice of optimally placed winding for the charging operation.

Thereby, there is a conflict of the desired aims between the maximum positioning tolerance and the maximum coupling between the primary winding and the secondary winding.

A simplified analysis of reactive power compensation and the control technology used in the inductive charging system will be carried out. It shows the advantages and the limits of the discussed design. At large positioning faults the introduced system reaches a higher efficiency than a comparable system, which was designed only at a maximum coupling of the windings.

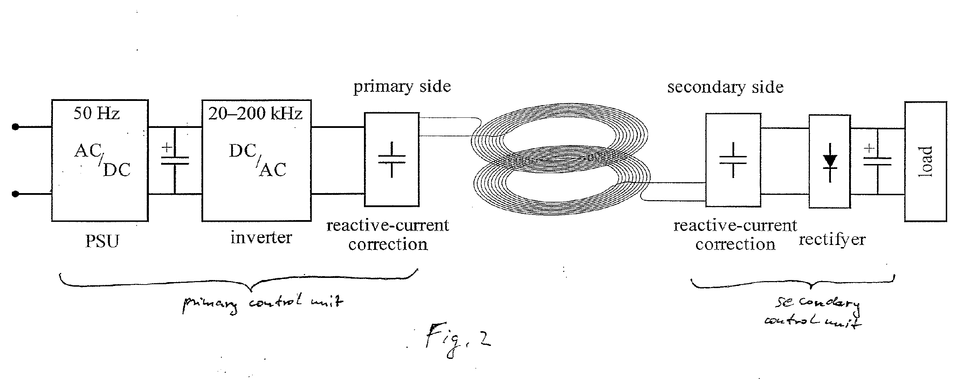

A simplified block diagram of the complete system is shown in **figure 2.** In an inductive charging systems the load represents charger and accumulator.

**2 Design of the windings**

**2.1 Inductance of flat windings**

The inductance of simple flat windings for both, rotation symmetrical and rectangular shape can be calculated with empirical formula given in equation 1 and 2.

$$L\,[\text{nH}] = \frac{24{,}6 N^2 D\,[\text{cm}]}{1 + 2{,}75\frac{S}{D}} \qquad (1)$$

Equation 1 describes the inductance for a rotation symmetrical flat winding and equation 2 for an flat winding with rectangular shape.

Diagrams to the reduction factor $K_{13}$ in equation 2 can also be found in [1].

$$\begin{aligned} L\,[\text{nH}] = 4N^2 \cdot S_1\,[\text{cm}] \cdot \Bigg[ &\ln\left(\frac{2S_1 S_2}{Na(S_1 + q)}\right) \\ &+ \frac{S_2}{S_1} \cdot \ln\left(\frac{2S_1 S_2}{Na(S_2 + q)}\right) + \frac{0{,}45Na}{S_1} \\ &+ \frac{2q}{s1} - \left(1 + \frac{S_2}{S_1}\right) \cdot \left(0{,}5 + \frac{K_{13}}{N}\right) \Bigg] \end{aligned} \qquad (2)$$

$N$ number of turns

$D$ : average diameter in cm

$S$ : spread of the winding in cm

$S_1$ : effective length of the winding in cm

$S_2$ effective width of the winding in cm

$a$ wire stuck out to each other in cm

$q$ effective diagonal of the winding in cm $\quad q = \sqrt{S_1^2 + S_2^2}$

$K_{13}$ : reduction factor, typically $K_{13} \ll 1$

In principle, the inductivity can be calculated from the magnetic flux and the current, $L = N\cdot\Phi/I$.

**2.2 Basic approach**

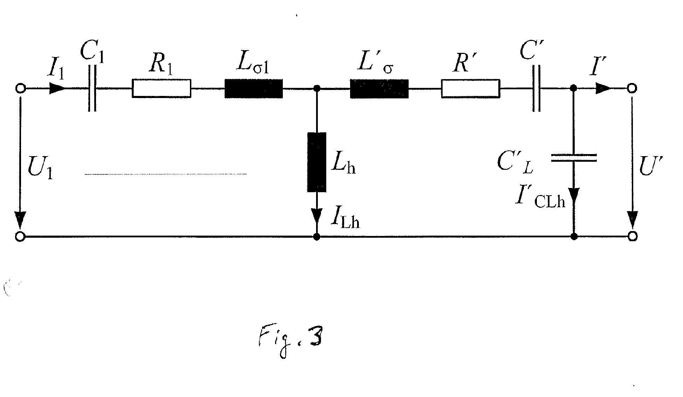

The two mutual-inductively coupled wires can be described by an equivalent circuit, similarly as when a transformer equivalent circuit. **Figure 3** shows the transformer equivalent circuit of the inductive coupling, with reactive current correction.

The primary inductance $L_p$ and seondary inductance $L_s$ can be calculated from equation 1, equation 2 or with $L = N \cdot \Phi / I$.

Knowing the the flux density $\vec{B}$ leads to the calculation of the mutual inductance $L_h$ and the coupeling coefficients $k_{12}$ and $k_{21}$.

$$k_{12} = \frac{L_h}{L_p} = \frac{\Phi_h}{\Phi_p} \qquad (3)$$

$$k_{21} = \frac{L_h''}{L_s} = \frac{\Phi_h}{\Phi_s} \qquad (4)$$

As shown in figure 1 the use of a larger rectangular primary winding and a smaller secondary winding is planned. The flux density $\vec{B}$ above the larger primary winding can be simplified considering only the dependency from the width (x-axis) and height: $\vec{B}(x,y,z) \approx \vec{B}(x,z)$.

Both windings are parallell to each other in the x-y plane. Therefore only $B_z$ is necessary for the calculation of the mutual inductance $L_h$.

$$
\begin{aligned}
L_h &= k_{12} \cdot L_p \\
L_h &= k_{12} \cdot \frac{\Phi_p \cdot N_1}{I_1} \\
L_h &= \frac{\Phi_h \cdot N_1}{I_1} \\
L_h &= \iint_{A_{L_s}} \vec{B} \cdot \vec{n}_A \, dA \cdot \frac{N_1}{I_1} \\
L_h &= \int_{y(A_{L_s})} \int_{x(A_{L_s})} \left( \vec{B} \cdot \vec{e}_z \right) \, dx \, dy \cdot \frac{N_1}{I_1} \\
L_h &= \int_{y(A_{L_s})} \int_{x(A_{L_s})} (B_z) \, dx \, dy \cdot \frac{N_1}{I_1} \qquad (5)
\end{aligned}
$$

Computing $L_h$, $L_p$ and $L_s$ all inductances of the equivalent electrical circuit can be determined: $L_{\sigma 1} = L_p - L_h$ and $L_{\sigma 2} = L_s - L_h''$. The mutual inductance $L_h$ is also simplified considered as only dependent from the width (x axis) and height, $L_h(x,z)$.

A simple flat winding as primary winding has a distinctive maximum for $\vec{B}(x,z)$ in the central area of the winding. With one or more coils in the opposite winding direction in the middle of the primary winding this distinctive maximum can be removed.

The objective is to find a flux density distribution $\vec{B}(x,z)$ which yields to an almost constant mutual inductance $L_h(x,z)$ in x-direction and also in y-direction as far as possible.

### 2.3 Simplified calculation of the flux density distribution

For further calculations the determination of the z-component of $\vec{B}$ ($B_z$) is necessary.

Equation 6 describes the flux density around a wire caused by the current $I$. The z-component of the flux density can be calcuteted by equation 7.

$$\vec{B} = \mu \cdot \vec{H} = \mu |H| \cdot \vec{e}_\varphi$$

$$\vec{B} = \left(\frac{\mu I}{2\pi r}\right) \cdot \vec{e}_\varphi$$

$$\vec{B} = \left(\frac{\mu I}{2\pi \sqrt{x^2 + z^2}}\right) \cdot \vec{e}_\varphi \qquad (6)$$

$$B_z = \left|\vec{B} \cdot \vec{e}_z\right|$$

$$B_z = |B| \cdot \vec{e}_\varphi \cdot \vec{e}_z$$

$$B_z = |B| \cdot \frac{x}{r} \cdot \vec{e}_z$$

$$B_z(x,z) = \frac{x}{\sqrt{x^2 + z^2}} \cdot \left(\frac{\mu I}{2\pi \sqrt{x^2 + z^2}}\right) \qquad (7)$$

The magnetic flux density at the position $x = 0$ and $z = 0$ caused by a wire which carries a current in y-direction is given by equation 8:

$$B_z(x,z) = \frac{(x-a)}{\sqrt{(x-a)^2 + z^2}} \cdot \left(\frac{\mu I}{2\pi \sqrt{(x-a)^2 + z^2}}\right) \qquad (8)$$

Equation 8 can be used to compute the flux density over the primary winding. For a primary winding with $N_1$ wires in positiv direction of the y-axis at $x = a_i$, and $N_1$ wires in negative direction of the y-axis ($x = a_k$) the magnetic flux density is given by the following equation:

$$B_z(x,z) \approx \sum_{i=1}^{N_1} \left(\frac{(x-a_i)}{\sqrt{(x-a_i)^2 + z^2}} \cdot \frac{\mu I_1}{2\pi \sqrt{(x-a_i)^2 + z^2}}\right)$$

$$- \sum_{k=1}^{N_1} \left(\frac{(x-a_k)}{\sqrt{(x-k_i)^2 + z^2}} \cdot \frac{\mu I_1}{2\pi \sqrt{(x-a_k)^2 + z^2}}\right) \qquad (9)$$

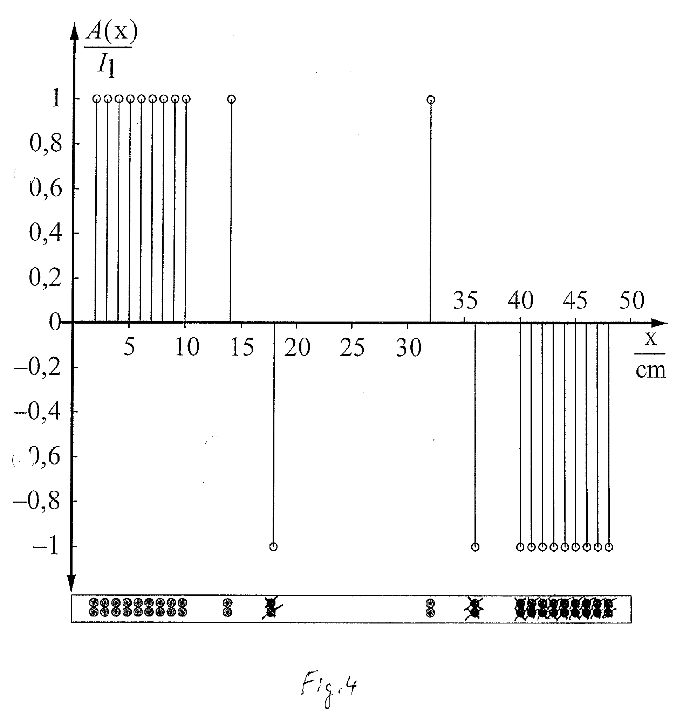

100 cm of x 50 cm are the outer dimensions for the primary winding. The winding set up in figure 4 was found with an parameter-sweep over different number of turns and positions for the inner windings with opposite winding direction.

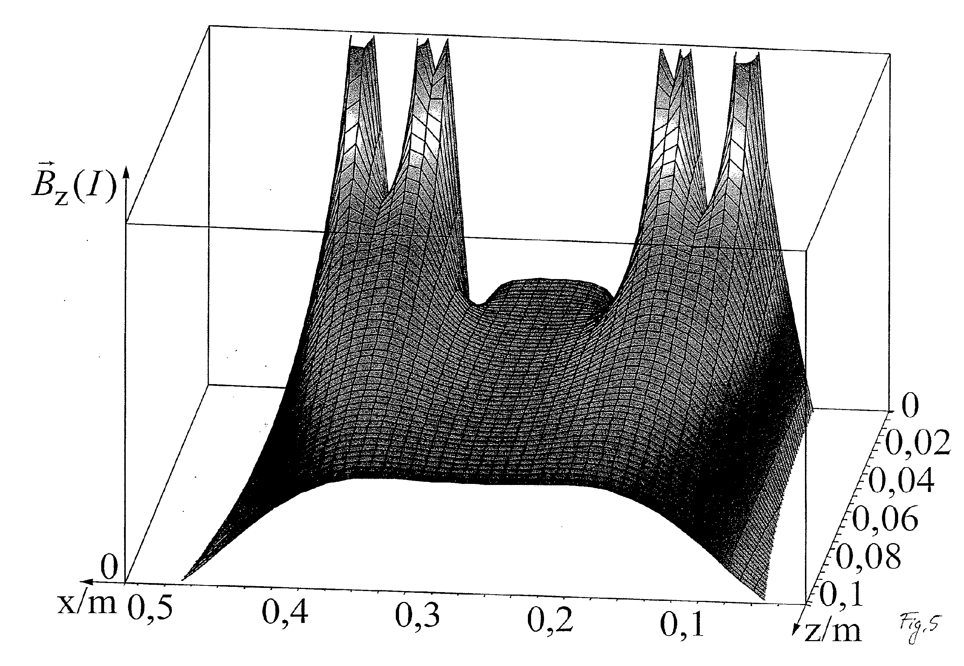

**Figure 5** shows the flux density distribution corresponding with the current coating in figure 4 and the equation 9 for $B_z(x,z)$.

2.4 Calculation of the mutual inductance and the coupeling coefficients

The integration about a circular area (radius r) can be parameterized to simply the integration to an integration over one variable, for example with $y = \sqrt{r^2 - x_2}$.

The secondary winding consists of $N_2$ circular windings around a center at $x = m_x$. The effective area $A_{L_s}$ shaped by the secondary winding is shown in equation 10.

$$A_{L_s} = \sum_{i=1}^{N_2} \left(\frac{2}{N_2} \cdot \int_{m_x - r_i}^{m_x + r_i} \left(\sqrt{r_i^2 - (x - m_x)^2}\right) dx\right) \qquad (10)$$

The mutual inductance $L_h$ can be determined from the integration over $B_z(x, z)$ given by equation 11.

The outer diameter of the secondary winding is 25 cm. The winding set-up for the secondary winding has been found with an parameter-sweep over different inner and outer diameters.

$$L_h \approx \iint_{A_{Ls}} (B_z(x,z))\, d\vec{A} \cdot \frac{N_1}{I_1}$$

$$L_h \approx \frac{N_1}{I_1} \cdot \frac{2}{N_2}$$

$$\cdot \sum_{i=1}^{N_2} \left[ \int_{m_x-r_i}^{m_x+r_i} \left( \sqrt{r_i^2 - (x - m_x)^2} \cdot B_z(x,z) \right) dx \right] \qquad (11)$$

with: $B_z(x,z)$ from equation 9

$m_x$ center of the secondary winding

The secondary inductance $L_s$ can be calculated with the equation 1. Estimation of $L_p$ is possible by calculation of $\Phi_p$. The flux from the primary inductance $\Phi_p$ can be estimated by the integration of $B_z(x,z)$ from the left zero ($B_z(x,z)$ = 0) to the right one, multiplied by the effective length of the primary winding ($\approx$ 100cm).

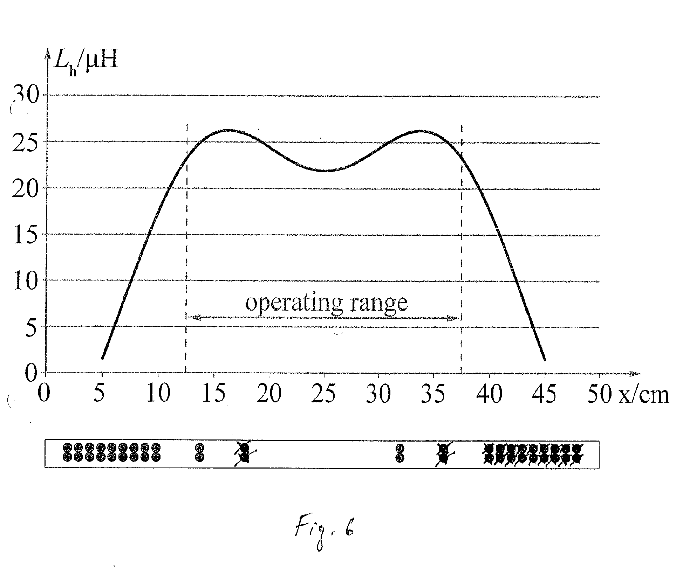

The mutual inductance $L_h$ over the x-axis calculated with equation 11 is shown in **figure 6.**

The operating range is a little larger than about the half of the width of the x-axis

The maximum of the not normalized coupling coefficient $k_{12}$ from a normal flat winding is only a little larger, less than 20%. The countermoving windings in the middle of the primary winding lower not only the main flux $\Phi_h$ but also the flux of the primary winding $\Phi_p$.

### 3 Measurements

The measurements and calculation of designed inductive coupling windings give the following results for the values of a Transformer equivalent circuit.

$L_h$ = 23,32 $\mu$H (mutual inductance)
$L_{\sigma1}$ = 400,68 $\mu$H (primary leakage inductance)
$L'_{\sigma1}$ = 63,68 $\mu$H (secondary leakage inductance)
$N_1$ = 22 (number of turns primary winding)
$N_2$ = 22 (number of turns secondary winding)
$R_1 \approx$ 120 m$\Omega$ (primary winding resistance)
$R_2 \approx$ 30 m$\Omega$ (secondary winding resistance)

All inductances for secondary and primary winding are given with their mean values in operating range.

The calculated inductances are very close (within a range of 4%) to the values from the measurements. Except the calculated inductance for $L_{\sigma1}$. This is because estimated inductance $L_p$.

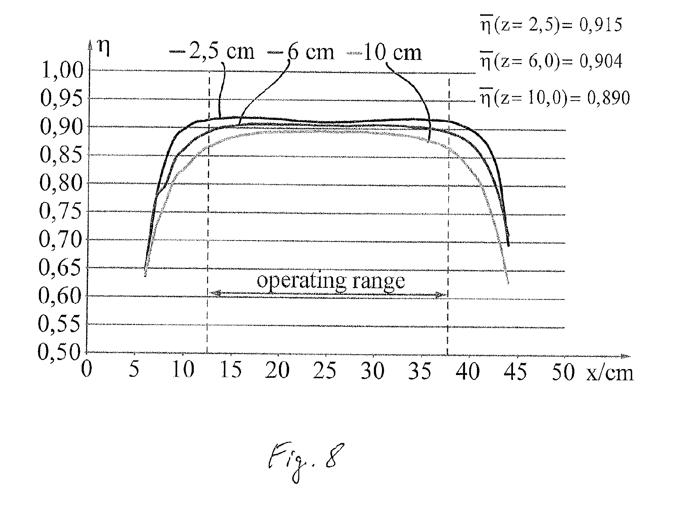

The efficiency $\eta$ in operating range is near constant over the x-axis (figure 8). The measurements of the efficiency are done for a current frequency of about 18 kHz. The frequency has been controled for zero current switching at the power inverter.

The copper losses in the windings are dominating.

### 4 Conclusion and outlook

A lay out for primary and secondary windings of an inductive charging system has been introduced. The set-up enables the increasing of the positioning tolerance of the charging system.

The proto-type is positioning tolerant but too small in size for large distances between the primary and secondary windings. Practically usable windings for these kind of systems must be built up in larger dimenstions.

The copper losses can be lowered by a higher copper cross-section. In addition the efficiency can be increased by working at higher frequency. With a sufficiently reactive current compensation the performance is scaling linear with the frequency up to approx. 100 kHz.

The calculation procedures for the inductance shall be developed into a two-dimensional design and completed considering magnetic shielding.

**References**

[1] Meinke und Gundlach: Taschenbuch der Hochfrequenztechnik 3rd ed. Berlin, Deutschland: Springer-Verlag, 1968

[2] N. Parspour: Berührungslose Energieübertragung - Stand der Technik' VDE- Fachtagung Elektrisch-mechanische Antriebssysteme. pp. 403-414, Deutschland, 2004

[3] N. Parspour, A. Babazadeh, E. Zilinskie: Contacless Energy Transfer System for Electromechanical Devices International Conference on Electrical Machines (ICEMS) p. PK-7(429-M07-010) pp. 296, Jeju Island, 2004

[4] P. Wambsganß, N. Parspour: Kontaktlose Energieübertragung Electronik scout 2010 pp. 22-28, Deutschland, WEKA FACHMEDIEN, 2009

[5] E. Waffenschmidt: Wireless power for mobile devices Workshop "Kontaktlose Energie- und Datenubertragung für innovative Anwendungen", Deutschland, Kontenda GmbH, 2008

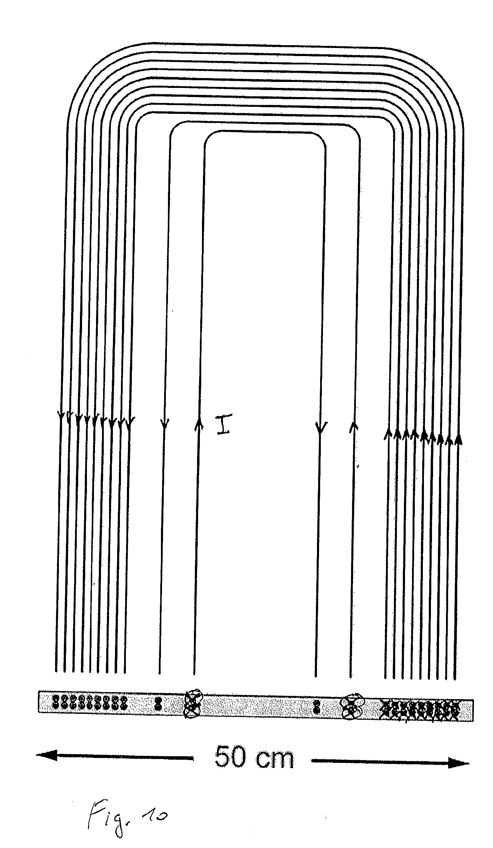

Fig. 10 illustrates the winding directions of a coil unit proposed according to the present invention. As shown, the innermost winding has a different winding direction than the other outer windings. In other words, the current I (running through all windings) runs through said inner winding in a different direction than through the other windings.

Generally, as mentioned, the same current runs through all windings, i.e. only a single current is provided to the complete coil unit. However, in other embodiments, there may be two different current terminals provided at such a coil unit so that a separate current is provided to the one or more windings having a winding direction opposite to the winding direction of the other windings which are provided with a different current (e. g. different amplitude, phase, and/or frequency) from a different current source. Also by providing such different currents to the different windings of a coil unit, it may be achieved that the desired magnetic fields are substantially constant in an area as large as possible.

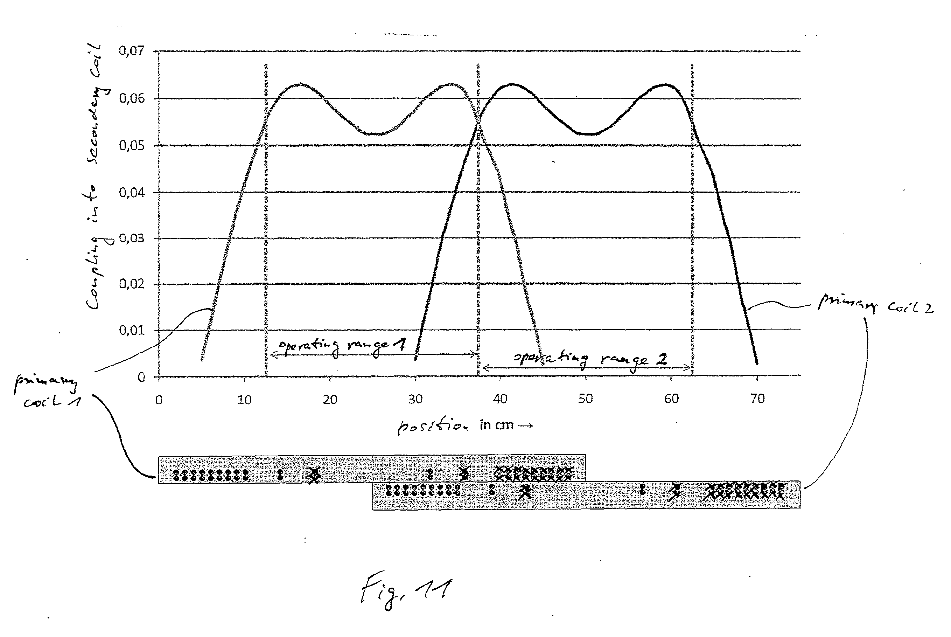

Fig. 11 shows that the area may even be increased by providing two or more coil units, here in this embodiment, providing two primary coil units overlapping each other so that the operating ranges, in which the magnetic field is substantially constant, are directly adjacent.

In a practical implementation the primary coil unit is modified as described above and is integrated into the floor of a parking lot, e. g. in public or corporate parking garages or in the home garage of private users, and the secondary coil unit is integrated into a car's bottom. When the car parks on such a parking lot it is not needed to park the car at an exact position but, to a certain degree, a position tolerance is available. Nevertheless, the electrical power is inductively charging the car's battery (the car being e. g. hybrid vehicle or a purely electrical car) with a high degree of efficiency.

In more advanced embodiments it may also be possible that the primary coil unit and/or the secondary coil unit are moveable to decrease the distance in between for charging with an even higher degree of efficiency. In another embodiment, the secondary coil unit may be integrated into the car's roof, and the primary coil unit may be integrated into the ceiling and may, for instance, be moveable downwards.

While the invention has been illustrated and described in detail in the drawings and in the foregoing description, such illustrations and the description are to be considered illustrative or exemplary and not restrictive; the invention is not limited to the disclosed embodiments. Other variations to the disclosed embodiments can be understood by those skilled in the art in practicing the claimed invention from a study of the drawings, the disclosure and the independent claims.

**Claims**

1. Coil arrangement for use in an inductive charging device, comprising:

   - a primary coil unit having a first number of primary windings arranged in a primary plane and wound around a common primary central area forming a single primary coil,
   - a secondary coil unit having a second number of secondary windings substantially arranged in a secondary plane and wound around a common secondary central area forming a single secondary coil,

   wherein said primary plane and said secondary plane are arranged substantially in parallel,

wherein said primary coil unit and said secondary coil unit are of a different size, and
wherein said primary coil unit and said secondary coil unit are movable relative to each other,
**characterized in that** at least one of said primary windings has an opposite winding direction than the other primary windings and/or at least one of said secondary windings has an opposite winding direction than the other secondary windings.

2. Coil arrangement as claimed in any preceding claim,
wherein said at least one primary winding and/or the at least one secondary winding is the innermost winding of the respective coil unit.

3. Coil arrangement as claimed in any preceding claim,
wherein less than 50 %, in particular less than 10 %, of the primary windings and/or the secondary windings have an opposite winding direction than the other primary windings and/or secondary windings of the respective coil unit.

4. Coil arrangement as claimed in any preceding claim,
wherein the distance of said at least one primary winding and/or secondary winding, respectively, to the directly adjacent primary winding and/or secondary winding, respectively, is different from the distance between other primary windings and/or secondary windings, respectively.

5. Coil arrangement as claimed in any preceding claim,
wherein at least one primary winding has a winding direction opposite to the winding direction of the other primary windings, and
wherein the secondary coil windings all have the same winding direction.

6. Coil arrangement as claimed in claim 5,
wherein the area of the primary plane surrounded by the innermost primary winding is larger than the area of the secondary plane surrounded by the innermost secondary winding of the secondary coil unit.

7. Coil arrangement as claimed in any preceding claim,
wherein the windings of the primary coil unit and/or the secondary coil unit may be arranged in a round, oval, rectangular, square, or meander-like form.

8. Coil arrangement as claimed in any preceding claim,
wherein the primary windings of the primary coil unit have a rectangular shape and the secondary windings of the secondary coil unit have a circular shape.

9. Coil arrangement as claimed in any preceding claim,
further comprising one or more additional primary coil unit(s) partly overlapping each other or being arranged adjacent to each other within the primary plane and/or one or more additional coil units partly overlapping each other or being arranged adjacent to each other within said secondary plane.

10. Coil arrangement as claimed in any preceding claim,
wherein said at least one primary winding and/or at least one secondary winding is arranged differently, in particular having a different width and/or thickness of the winding than the other primary windings and/or secondary windings, respectively.

11. Inductive charging device, comprising a coil arrangement as claimed in any preceding claim for inductively transferring energy provided from an external power supply coupled to said primary coil unit to an external load coupled to said secondary coil unit.

12. Inductive charging device as claimed in claim 11,
further comprising a primary control unit coupled between said external power supply and said primary coil unit for controlling the primary current supplied to said primary coil unit.

13. Inductive charging device as claimed in claim 12,
wherein said primary coil unit comprises a controlled inverter for providing said current to said primary current unit and an inverter control unit for controlling the current level and/or frequency of said inverter.

**14.** Inductive charging device as claimed in claim 13,
wherein said primary control unit a comprises a reactive current correction unit for compensation of reactive components in said current provided to said primary coil unit.

**Patentansprüche**

**1.** Spulenanordnung zur Benutzung in einer induktiven Ladevorrichtung mit:

- einer Primärspuleneinheit mit einer ersten Anzahl an Primärwindungen, die in einer Primärebene angeordnet sind und um einen gemeinsamen primären Zentralbereich gewunden sind und eine erste Primärspule bilden,
- einer Sekundärspuleneinheit mit einer zweiten Anzahl an Sekundärspulen, die im Wesentlichen in einer Sekundärebene angeordnet sind und um einen gemeinsamen sekundären Zentralbereich gewunden sind und eine einzelne Sekundärspule bilden,

wobei die Primärebene und die Sekundärebene im Wesentlichen parallel zueinander angeordnet sind,
wobei die Primärspuleneinheit und Sekundärspuleneinheit unterschiedliche Größen aufweisen, und
wobei die Primärspuleneinheit und die Sekundärspuleneinheit relativ zueinander bewegbar sind,
**dadurch gekennzeichnet, dass** wenigstens eine der Primärwindungen eine entgegengesetzte Windungsrichtung aufweist als die anderen Primärwindungen und/oder wenigstens eine der Sekundärwindungen eine entgegengesetzte Windungsrichtung aufweist als die anderen Sekundärwindungen.

**2.** Spulenanordnung wie in einem vorstehenden Anspruch beansprucht,
wobei die wenigstens eine Sekundärwindung und/oder die wenigstens eine Sekundärwindung die innerste Windung der jeweiligen Spuleinheit ist.

**3.** Spulenanordnung wie in einem vorstehenden Anspruch beansprucht,
wobei weniger als 50 %, insbesondere weniger als 10 %, der Primärwindungen und/oder der Sekundärwindungen eine entgegengesetzte Windungsrichtung aufweisen als die anderen Primärwindungen und/oder Sekundärwindungen der jeweiligen Spuleneinheit.

**4.** Spulenanordnung wie in einem vorstehenden Anspruch beansprucht,
wobei der Abstand der wenigstens einen Primärwindung bzw. Sekundärwindung zu der direkt benachbarten Primärwindung bzw. Sekundärwindung unterschiedlich ist von dem Abstand zwischen anderen Primärwindungen bzw. Sekundärwindungen.

**5.** Spulenanordnung wie in einem vorstehenden Anspruch beansprucht,
wobei wenigstens eine Primärwindung eine Windungsrichtung aufweist, die entgegengesetzt ist zu der Windungsrichtung der anderen Primärwindungen, und wobei die Sekundspulenwindungen alle dieselbe Windungsrichtung aufweisen.

**6.** Spulenanordnung wie in Anspruch 5 beansprucht,
wobei der von der innersten Primärspule umgebene Bereich der Primärebene größer ist als der von der innersten Sekundärwindung der Sekundärspuleneinheit umgebene Bereich der Sekundärebene.

**7.** Spulenanordnung wie in einem vorstehenden Anspruch beansprucht,
wobei die Windungen der Primärspuleneinheit und/oder Sekundärspuleneinheit in einer runden, ovalen, rechteckigen, quadratischen oder mäanderförmigen Form angeordnet sein können.

**8.** Spulenanordnung wie in einem vorstehenden Anspruch beansprucht,
wobei die Primärwindungen der Primärspuleneinheit eine rechteckige Form aufweisen und die Sekundärwindungen der Sekundärspuleneinheit eine runde Form aufweisen.

**9.** Spulenanordnung wie in einem vorstehenden Anspruch beansprucht, ferner mit einer oder mehreren zusätzlichen Primärspuleneinheit(en), die sich teilweise gegenseitig überlappen oder die benachbart zueinander angeordnet sind innerhalb der Primärebene und/oder einer oder mehreren zusätzlichen Spuleneinheiten, die sich teilweise gegenseitig überlappen oder die benachbart zueinander angeordnet sind innerhalb der Sekundärebene.

**10.** Spulenanordnung wie in einem vorstehenden Anspruch beansprucht, wobei die wenigstens eine Primärwindung und/oder die wenigstens eine Sekundärwindung unterschiedlich angeordnet ist, insbesondere eine unterschiedliche Breite und/oder Dicke der Windung aufweist als die anderen Primärwindungen bzw. Sekundärwindungen.

**11.** Induktive Ladevorrichtung mit einer Spulenanordnung wie in einem vorstehenden Anspruch beansprucht zur induktiven Übertragung von Energie, die von einer externen Energieversorgung, die mit der Primärspuleneinheit gekoppelt ist, bereitgestellt ist, an eine externe Last, die mit der Sekundärspuleneinheit gekoppelt ist.

**12.** Induktive Ladevorrichtung wie in Anspruch 11 beansprucht, ferner mit einer Primärsteuereinheit, die zwischen der externen Energieversorgung und der Primärspuleneinheit gekoppelt ist zur Steuerung des an die Primärspuleneinheit gelieferten Primärstroms.

**13.** Induktive Ladevorrichtung wie in Anspruch 12 beansprucht, wobei die Primärspuleneinheit einen gesteuerten Umrichter zum Bereitstellen des Stromes an die Primärspuleneinheit und eine Umrichtersteuereinheit zum Steuern des Strompegels und/oder der Frequenz des Umrichters aufweist.

**14.** Induktive Ladevorrichtung wie in Anspruch 13 beansprucht, wobei die Primärsteuereinheit eine Blindstromkorrektureinheit aufweist zur Kompensation von Blindleistungskomponenten im an die Primärspuleneinheit bereitgestellten Strom.

## Revendications

**1.** Arrangement de bobine pour utilisation dans un dispositif de charge inductive, comprenant:

- une unité de bobine primaire ayant un premier nombre d'enroulements primaires disposés dans un plan primaire et enroulés autour d'une zone primaire centrale commun formant une seule bobine primaire,
- une unité de bobine secondaire ayant un second nombre d'enroulements secondaires disposés essentiellement dans un plan secondaire et enroulés autour d'une zone secondaire centrale formant une seule bobine secondaire,

dans lequel ledit plan primaire et ledit plan secondaire sont disposés essentiellement en parallèle, dans lequel ladite unité de bobine primaire et ladite unité de bobine secondaire sont d'une taille différente, et dans lequel ladite unité de bobine primaire et ladite unité de bobine secondaire sont mobile par rapport à l'autre, **caractérisé en ce que** au moins l'un desdits enroulements primaires a un sens d'enroulement opposé à celui des autres enroulements primaires et/ou au moins l'un desdits enroulements secondaires a un sens d'enroulement opposé à celui des autres enroulements secondaires.

**2.** Arrangement de bobine selon l'une des revendications précédentes, dans lequel ledit au moins un enroulement primaire et/ou le au moins un enroulement secondaire est l'enroulement le plus intérieure de l'unité de bobine respective.

**3.** Arrangement de bobine selon l'une des revendications précédentes, dans lequel moins que 50 %, en particulière moins que 10 %, des enroulements primaires et/ou des enroulements secondaires ont un sens d'enroulement opposé par rapport aux autres enroulements primaires et/ou enroulements secondaires de l'unité de bobine respective.

**4.** Arrangement de bobine selon l'une des revendications précédentes, dans lequel la distance entre ledit au moins un enroulement primaire et/ou enroulement secondaire, respectivement, et l'enroulement primaire et/ou enroulement secondaire directement adjacent, respectivement, est différente de la distance entre d'autres enroulements primaires et/ou enroulements secondaires, respectivement.

**5.** Arrangement de bobine selon l'une des revendications précédentes, dans lequel au moins un enroulement primaire a un sens d'enroulement opposé par rapport au sens d'enroulement des autres enroulements primaires, et dans lequel les enroulements de bobine secondaire ont tous le même sens d'enroulement.

EP 2 428 969 B1

**6.** Arrangement de bobine selon la revendication 5,
dans lequel la zone du plan primaire entouré par l'enroulement primaire la plus intérieur est plus grande que la zone du plan secondaire entourée par l'enroulement secondaire le plus intérieur de l'unité de bobine secondaire.

**7.** Arrangement de bobine selon l'une des revendications précédentes,
dans lequel les enroulements de l'unité de bobine primaire et/ou de l'unité de bobine secondaire peuvent être disposés dans une forme ronde, ovale, rectangulaire, quadratique ou de sorte méandre.

**8.** Arrangement de bobine selon l'une des revendications précédentes,
dans lequel les enroulements primaires de l'unité de bobine primaire sont d'une forme rectangulaire et les enroulements secondaires de l'unité de bobine secondaire sont d'une forme circulaire.

**9.** Arrangement de bobine selon l'une des revendications précédentes, comprenant en outre une ou plusieurs autres unité(s) de bobine primaire se chevauchant partiellement ou étant disposés adjacent l'une à l'autre dans le plan primaire et/ou une ou plusieurs autres unités de bobine se chevauchant partiellement ou étant disposés adjacent l'une à l'autre dans ledit plan secondaire.

**10.** Arrangement de bobine selon l'une des revendications précédentes,
dans lequel ledit au moins un enroulement primaire et/ou au moins un enroulement secondaire est disposé différemment, en particulière ayant une largeur et/ou épaisseur de l'enroulement différente des autres enroulements primaires et/ou enroulements secondaires, respectivement.

**11.** Dispositif de charge inductive, comprenant un arrangement de bobine selon l'une des revendications précédentes pour transmission inductive d'énergie fournie par une alimentation en énergie externe couplée à ladite unité de bobine primaire à une charge externe couplé à ladite unité de bobine secondaire.

**12.** Dispositif de charge inductive selon la revendication 11,
comprenant en outre une unité de commande primaire couplée entre ladite alimentation en énergie externe et ladite unité de bobine primaire pour commander le courant primaire fourni à ladite unité de bobine primaire.

**13.** Dispositif de charge inductive selon la revendication 12,
dans lequel ladite unité de bobine primaire comprend un onduleur commandé pour fournir ledit courant à ladite unité de courant primaire et une unité de commande d'onduleur pour commander le niveau de courant et/ou la fréquence dudit onduleur.

**14.** Dispositif de charge inductive selon la revendication 13,
dans lequel ladite unité de commande primaire comprend une unité de correction de courant réactive pour compensation de components réactifs dans ledit courant fourni à ladite unité de bobine primaire.

Fig. 1

primary side                       secondary side

| 50 Hz AC/DC | + | 20–200 kHz DC/AC | reactive-current correction | | reactive-current correction | rectifyer | + | load |

PSU        inverter

primary control unit

secondary control unit

Fig. 2

EP 2 428 969 B1

Fig. 3

Fig. 4

Fig. 5

Fig. 6

Fig. 7

Fig. 8

Secondary coil unit

primary coil unit

Fig. 9

50 cm

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 200400974 A1
- US 7323964 B1
- US 2402599 A
- US 20070216377 A1
- US 20080266042 A1
- EP 0298707 A2
- US 5557206 A1

### Non-patent literature cited in the description

- **MEINKE ; GUNDLACH.** Taschenbuch der Hochfrequenztechnik. Springer-Verlag, 1968
- **N. PARSPOUR.** Berührungslose Energieübertragung - Stand der Technik. *VDE- Fachtagung Elektrisch-mechanische Antriebssysteme,* 2004, 403-414
- **N. PARSPOUR ; A. BABAZADEH ; E. ZILINSKIE.** Contacless Energy Transfer System for Electromechanical Devices. *International Conference on Electrical Machines (ICEMS) p. PK-7(429-M07-010,* 2004, 296
- **P. WAMBSGANß ; N. PARSPOUR.** Kontaktlose Energieübertragung. *Electronik scout 2010,* 2009, 22-28
- **E. WAFFENSCHMIDT.** Wireless power for mobile devices Workshop. *Kontaktlose Energie- und Datenubertragung für innovative Anwendungen,* 2008